# EUROPÄISCHE PATENTSCHRIFT

(11) **EP 1 662 629 B1**
(45) Veröffentlichungstag und Bekanntmachung des Hinweises auf die Patenterteilung: **09.09.2009**
(21) Anmeldenummer: 05025430.9
(22) Anmeldetag: 22.11.2005
(51) Int. Cl.: H02G 3/32

(54) **Halter und Verfahren zur Befestigung von Leitungen an Leichtbauelementen von Verkehrsmitteln, insbesondere an Sandwichplatten von Luftfahrzeugen**
Holder and method for fixing lines on light-weight construction elements of transport means, in particular on sandwich panels of aeroplanes
Support et méthode de fixation de lignes sur des éléments de contruction légers de moyens de transport, en particulier sur des panneaux à structure sandwich d'aéronefs

(30) Priorität: 30.11.2004 DE 102004057568
(43) Veröffentlichungstag der Anmeldung: 31.05.2006
(73) Patentinhaber: Airbus Deutschland GmbH, 21129 Hamburg (DE)
(72) Erfinder: Diergardt, Daniel, 22549 Hamburg (DE)
(74) Vertreter: Maiwald Patentanwalts GmbH

(56) Entgegenhaltungen:
- EP-A- 1 300 596
- WO-A-94/16256
- DE-U1- 7 734 879
- GB-A- 1 218 274
- US-A- 3 105 969

## Beschreibung

Die Erfindung betrifft einen Halter zur Befestigung von Leitungen an Leichtbauelementen von Verkehrsmitteln, insbesondere an Sandwichplatten von Luftfahrzeugen, mit einer mindestens einen Haltezapfen aufweisenden Grundplatte.

Weiterhin betrifft die Erfindung ein Verfahren zur Befestigung von Leitungen an Leichtbauelementen von Verkehrsmitteln, insbesondere an Sandwichplatten von Luftfahrzeugen, mittels des erfindungsgemäßen Halters.

Bekannte Halter zur Befestigung von Leitungen in Verkehrsmitteln, insbesondere zur Befestigung von elektrischen, optischen oder hydraulischen Leitungen in Luftfahrzeugen, sind im Allgemeinen für den Einsatz an Strukturelementen optimiert. Derartige Halter werden normalerweise unmittelbar an den betreffenden Aluminium- oder Stahlbauteilen, beispielsweise an Versteifungen oder Trägem, durch Schraub-, Klemm-, Kleb- oder Steckverbindungen befestigt.

Aufwändiger gestaltet sich hingegen die Befestigung der bekannten Halter an Leichtbauelementen, beispielsweise an Sandwichplatten. Zur Befestigung der bekannten Halter muss zunächst eine Bohrung in das Leichtbauelement eingebracht werden. Im Anschluss daran wird in die Bohrung ein so genanntes Insert bzw. eine Einsetzmutter, Einsetzhülse oder dergleichen fest eingeklebt. Das Insert weist dann beispielsweise eine Gewindebohrung auf, in die eine Schraube zur Befestigung des eigentlichen Halters eingebracht werden kann. Auf dem Halter selbst wird die eigentliche Leitung, beispielsweise eine Hydraulik-, Elektro- oder Lichtwellenteitung durch entsprechende Befestigungsmittel fixiert. Alternativ ist es auch möglich, zunächst einen Adapter mit dem Halter zu verbinden, wobei an der Leitung entsprechende Gegenstücke angeordnet sind, die wiederum an dem Adapter, beispielsweise durch eine Rastverbindung schnell und leicht befestigbar sind. Hierdurch ergibt sich der Vorteil, dass die Gegenstücke schon vor der Montage an der Leitung befestigt werden können ("Vorkonfektionierung"). Darüber hinaus erlaubt die Verwendung unterschiedlicher Adapter die Verwendung nur eines Halter, für verschiedene Leitungsquerschnitte und/oder Leitungstypen.

Die Befestigung von derartigen Leitungen auf Leichtbauelementen mittels der bekannten Halter erfordert demzufolge immer mehrere Arbeitsschritte und gestaltet sich entsprechend aufwändig. Weiterhin bedingt die Vielzahl der zur Befestigung des Halters erforderlichen Teile (Insert, Schraube) zusätzliches Gewicht und die Gefahr des Verlustes von Teilen.

Damit sind die bekannten Halter nur eingeschränkt zur unkomplizierten Befestigung von Leitungen an Leichtbauelementen, insbesondere an Sandwichplatten, in Verkehrsmitteln geeignet.

Die EP 1 300 596 A1 beschreibt ein Verfahren, um eine Abstandsbuchse in einem Paneel zu befestigen, die ein Befestigungselement aufnehmen kann, wobei die Buchse eine Höhe aufweist, die größer als die Dicke des Paneels ist. Außerdem offenbart EP 1 300 596 A1 eine solche Buchse mit einer einen Haltezapfen aufweisenden Grundplatte, wobei der zumindest eine Haltezapfen in jeweils eine Bohrung innerhalb des Panels einklebbar ist, wobei der Haltezapfen einstückig mit der Grundplatte verbunden ist, und, wobei der Haltezapfen einen Befestigungsabschnitt mit einem Oberabschnitt, einem Endabschnitt sowie einen den Oberabschnitt und den Endabschnitt verbindenden Mittelabschnitt aufweist.

Aufgabe der Erfindung ist es einen Halter und ein Verfahren zu schaffen, die eine schnelle und einfache Befestigung von Leitungen an Leichtbauelementen von Verkehrsmitteln, insbesondere an Sandwichplatten von Luftfahrzeugen, erlauben.

Diese Aufgabe wird durch einen Halter mit den Merkmalen des Patentanspruchs 1 gelöst.

Dadurch, dass der oder die Haltezapfen in jeweils eine Bohrung innerhalb eines Leichtbauelementes einklebbar sind, wobei der oder die Haltezapfen einstückig mit der Grundplatte verbunden sind, ist eine einfache und schnelle Befestigung des erfindungsgemäßen Halters in Leichtbauelementen, insbesondere in Sandwichplatten, gegeben. Darüber hinaus ist Infolge der einstückigen Ausführung nur eine verringerte Anzahl von Teilen zur Bedes Halters erforderlich, wodurch sich zum einen das Gewicht des gesamten Halters und zum anderen die Gefahr eines Verlustes von Teilen während der Montage des Halters verringert. Durch die schwer lösbare Einklebung des Haltezapfens innerhalb der Kernstruktur einer Sandwichplatte ergibt sich darüber hinaus eine hohe mechanische Belastbarkeit des erfindungsgemäßen Halters, so dass auch Leitungen mit hoher Masse an Leichtbauelementen sicher fixierbar sind.

Weiterhin wird die Aufgabe durch ein Verfahren mit den Merkmalen des Patentanspruchs 15 gelöst.

Dadurch, dass mindestens eine Bohrung in das Leichtbauelement eingebracht wird, der oder die Haltezapfen in die jeweilige Bohrung eingebracht werden, ein Klebemittel durch mindestens einen Einfüllkanal im jeweiligen Haltezapfen in die jeweilige Bohrung eingebracht wird, um den Halter in dem Leichtbauelement zu befestigen, und mindestens eine Leitung im Bereich der Grundplatte befestigt wird,
ist eine einfache und schnelle Befestigung des Halters in Leichtbauelementen, insbesondere in Sandwichplatten, zur Befestigung von Leitungen gegeben. Darüber hinaus ergibt sich eine gute Überleitung von auf den Halter einwirkenden mechanischen Kräften in das Leichtbauelement.

Weitere vorteilhafte Ausgestaltungen des Halters und des Verfahrens sind in weiteren Patentansprüchen dargelegt.

In der Zeichnung zeigt:
- **Fig. 1**: Eine Vorderansicht einer ersten Ausführungsvariante des Halters mit einem Haltezapfen,
- **Fig. 2**: eine Draufsicht auf die erste Ausführungsvariante des Halters,
- **Fig. 3**: eine perspektivische Ansicht der ersten Ausführungsvariante des Halters,
- **Fig. 4**: eine Draufsicht auf eine zweite Ausführungsvariante des Halters mit zwei Haltezapfen,
- **Fig. 5**: eine perspektivische Ansicht der zweiten Ausführungsvariante des Halters,
- **Fig. 6**: eine Schnittdarstellung durch einen in einer Sandwichplatte eingeklebten Halter nach Maßgabe der ersten Ausführungsvariante,
- **Fig. 7**: eine schematische Darstellung des Kräfteverlaufs bei der Überleitung von Scherkräften vom Halter in die Sandwichplatte,
- **Fig. 8**: eine schematische Darstellung des Kräfteverlaufs bei der Überleitung von Zugkräften vom Halter in die Sandwichplatte und
- **Fig. 9**: einen Schnitt durch die Sandwichplatte entlang der Schnittlinie A-A in der Fig. 8 bei der Einleitung von Zugkräften in den Halter.

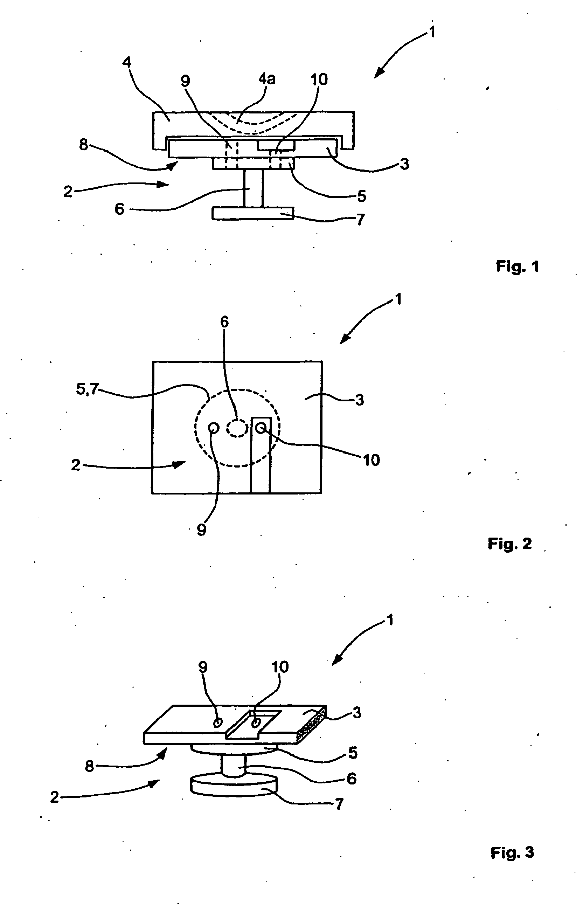

Die Fig. 1 zeigt eine Vorderansicht einer ersten Ausführungsvariante eines Halters 1 mit einem Haltezapfen 2.

Der Haltezapfen 2 ist an einer Grundplatte 3 angeordnet. Die Grundplatte 3 und der Haltezapfen 2 sind einstückig ausgebildet und bilden zusammen den Halter 1. Der Halter 1 kann durchgängig mit einem geeigneten Kunststoffmaterial, beispielsweise im Spritzgussverfahren hergestellt werden. Das Kunststoffmaterial kann darüber hinaus auch eine Faserverstärkung aufweisen.

Auf der Grundplatte 3 ist ein Adapter 4 befestigt. Die feste Verbindung des Adapters 4 mit der Grundplatte 3 erfolgt hierbei durch nicht näher dargestellte Verbindungsmittel, wie zum Beispiel Rastelemente oder dergleichen. Im Adapter 4 ist eine Durchführung 4a für ein Befestigungsmittel, beispielsweise für einen Kabelbinder, vorgesehen, um eine oder mehrere Leitungen direkt am Adapter 4 zu fixieren.

In einer Ausführungsvariante des Adapters 4 weist dieser Aufnahmemittel zur Verbindung mit an der Leitung befindlichen Gegenstücken auf. Die Aufnahmemittel, die zu befestigende Leitung und die darauf angeordneten Gegenstücke sind nicht näher dargestellt. Durch diese Ausgestaltung wird es möglich, eine mittels des Halters 1 zu befestigende Leitung bereits vor der eigentlichen Montage mit definiert zueinander beabstandeten Gegenstücken zu versehen (vorzukonfektionieren), sodass die Leitung durch einen einfachen, standardisierten Verbindungsvorgang, beispielsweise durch Aufdrücken, Einrasten oder Aufschieben der Gegenstücke auf die betreffenden Aufnahmemittel, auf dem Adapter 4 befestigbar ist.

In einer weiteren alternativen Ausführungsform kann der Adapter 4 so ausgebildet sein, dass eine zu befestigende Leitung, die in diesem Fall keine Gegenstücke aufweist, durch einen einfachen, standardisierten Verbindungsvorgang, beispielsweise durch Aufdrücken, Einrasten, Aufschieben oder dergleichen direkt auf dem Adapter 4 fixiert werden kann. In diesem Fall weist der Adapter 4 nicht näher dargestellte Befestigungsmittel, beispielsweise Rastelemente, Klemmelemente, Klammern, Schellen oder dergleichen, auf.

In einer weiteren Ausführungsvariante des erfindungsgemäßen Halters 1 kann die zu befestigende Leitung unter Weglassung des Adapters 4 durch mindestens ein geeignetes Befestigungsmittel, beispielsweise einen Kabelbinder, eine Schelle oder dergleichen, unmittelbar auf der Grundplatte 3 befestigt werden. In diesem Fall weist der Halter 1 mindestens eine - entsprechend zur Durchführung 4a ausgestaltete - Durchführung auf, durch die das oder die Befestigungsmittel zur Befestigung der Leitung hindurchgeführt bzw. an der Grundplatte 3 befestigt werden.

Bei den mittels des erfindungsgemäßen Halters 1 an Leichtbauelementen Leitungen kann es sich um Kabel bzw. Leitungen aller Art, beispielsweise um Hydraulikleitungen, Elektroleitungen, Lichtwellenleiter oder dergleichen handeln. Weiterhin sind mittels des Halters 1 einzelne Leitungen oder eine Mehrzahl von Leitungen, auch jeweils unterschiedlicher Art, befestigbar.

Der erfindungsgemäße Halter 1 ist zur Befestigung von Leitungen an Leichtbauplatten, insbesondere an Sandwichplatten, vorgesehen. Die Sandwichplatten weisen vorzugsweise eine Kernstruktur auf, die mit metallischen Materialien und/oder Kunststoffmaterialien gebildet ist. Die Kernstruktur kann beispielsweise als Honigwabe, offene Faltwabe, Schaumstoff oder dergleichen ausgebildet sein. Die Kernstruktur weist eine oder mehrere Deckschichten auf. Die vorzugsweise zumindest bereichsweise ebenen Deckschichten der Sandwichplatten sind ebenfalls mit einem metallischen Material und/oder mit einem Kunststoffmaterial, insbesondere mit Verbundwerkstoffen, mit Kohlefaserstrukturen, mit kohlefaserverstärkten Epoxydharzen oder dergleichen, gebildet. Der erfindungsgemäße Halter 1 kann darüber hinaus auch zur Befestigung von Leitungen aller Art an Leichtbauplatten verwendet werden, die mit einem homogenen Material gebildet sind.

Ein Befestigungsabschnitt des Haltezapfens 2 umfasst einen Oberabschnitt 5, einen Mittelabschnitt 6 sowie einen Endabschnitt 7. Der Oberabschnitt 5 sowie der Endabschnitt 7 sind vorzugsweise im Wesentlichen scheibenförmig ausgebildet, um eine Einbringung des Haltezapfens 2 in eine nicht dargestellte Bohrung innerhalb eines Leichtbauelementes zu ermöglichen. Abweichend hiervon können der Oberabschnitt 5 sowie der Endabschnitt 7 auch eine andere geometrische Querschnittsgestaltung aufweisen und beispielsweise vieleckig ausgebildet sein.

Der Mittelabschnitt 6 weist zumindest bereichsweise eine geringere Querschnittsfläche als der Oberabschnitt 5 und der Endabschnitt 7 auf. Hierdurch bildet sich beim Einbringen des Haltezapfens 2 in eine Bohrung im Bereich des Mittelabschnittes 6 ein Hohlraum, der mit einem Klebemittel zur Befestigung des Halters 1 in der Bohrung auffüllbar ist. Weisen der Oberabschnitt 5 sowie der Endabschnitt 7 beispielsweise eine von der Kreisform abweichende Querschnittsfläche auf, so muss das Leichtbauelement eine Ausnehmung mit einer entsprechenden Querschnittsgeometrie zur vollständigen Aufnahme des Haltezapfens 2 aufweisen, um eine ausreichende Abdichtung des Hohlraums durch den Oberabschnitt 5 bzw. den Endabschnitt 7 zu gewährleisten und einen undefinierten Klebemittelaustrag zu vermeiden.

Der Mittelabschnitt 6 weist nach Anspruch 1 eine von der Kreisform abweichende Querschnittsgeometrie aufweisen, um beispielsweise eine Verdrehung des Halters 1 in der Bohrung bzw. in der Sandwichplatte zu vermeiden. Eine von der Kreisform abweichende Querschnittsgeometrie ist insbesondere dann von Vorteil, wenn der Halter, wie in den Fig. 1 bis 3 dargestellt, nur einen Haltezapfen 2 aufweist, um eine Verdrehung des Halters zu erschweren. Alternativ ist beispielsweise eine vieleckige Ausgestaltung der Querschnittsfläche des Mittelabschnittes 6 möglich. Weiterhin ist es zur Verhinderung einer unerwünschten Torsion des Halters 1 auch möglich, kleine Widerstandselemente, beispielsweise in der Form von Aus- oder Einprägungen, Stegen, Widerhaken, Vertiefungen oder dergleichen insbesondere in radialer Richtung im Bereich des Mittelabschnittes 6 des Haltezapfens 2 anzuordnen. Mittels geometrisch geeignet gestalteter Widerstandselemente ist zugleich eine Erhöhung der vom Halter 1 maximal aufnehmbaren Zug- und Torsionskräfte möglich.

Die Grundplatte 3 umfasst weiterhin eine Auflagefläche 8, mit der der Halter 1 im befestigten Zustand im Wesentlichen plan auf der Sandwichplatte aufliegt. Die Auflagefläche 8 kann mit einem Klebemittel, beispielsweise einem Doppelklebeband, versehen sein, um die Montage des Halters 1 innerhalb eines Leichtbauelementes zu vereinfachen.

Der Halter 1 weist weiterhin einen Einfüllkanal 9 sowie einen Austrittskanal 10 auf. Der Einfüllkanal 9 dient zum Befüllen des vorstehend erwähnten Hohlraums mit einem Klebemittel zur Befestigung des Halters 1 in einer nicht dargestellten Bohrung. Der Austrittskanal 10 erfüllt in diesem Zusammenhang im Wesentlichen zwei Funktionen. Zum einen dient der Austrittskanal 10 zur Anzeige, ob der Füllvorgang des Hohlraums abgeschlossen ist, was durch ein Austreten des Klebemittels bei ausreichendem Füllgrad angezeigt wird. Gleichzeitig dient der Austrittskanal 10 zur Entlüftung des Hohlraums 10 bei der Befüllung mit dem Klebemittel.

Die Fig. 2 zeigt eine Draufsicht auf die erste Ausführungsvariante des Halters 1 ohne den Adapter 4.

Unterhalb der Grundplatte 3 sind der Oberabschnitt 5, der Mittelabschnitt 6 sowie der Endabschnitt 7 des Haltezapfens 2, von der Grundplatte 3 verdeckt, angeordnet. Der Einfüllkanal 9 sowie der Austrittskanal 10 sind beidseitig vom Mittelabschnitt 6 angeordnet und durchdringen die Grundplatte 3 sowie den Oberabschnitt 5. Der Mittelabschnitt 6 weist im gezeigten Ausführungsbeispiel der Fig. 2 eine im Wesentlichen kreisförmige Querschnittsfläche auf. Abweichend von der gezeigten kreisförmigen Querschnittsgeometrie des Mittelabschnittes 6 sind, wie vorstehend bereits beschrieben, auch hiervon abweichende Querschnittsgeometrien möglich, um eine Verdrehung des Halters 1 in einer Sandwichplatte zu vermeiden.

Die Fig. 3 zeigt eine perspektivische Ansicht der ersten Ausführungsvariante des Halters 1 ebenfalls ohne den Adapter 4.

Der Oberabschnitt 5 sowie der Endabschnitt 7 sind im Wesentlichen scheibenförmig ausgebildet und weisen ungefähr einen Durchmesser auf, der einem Durchmesser einer Bohrung entspricht, in die der Haltezapfen 2 zur Befestigung in einer Sandwichplatte eingeklebt wird. Der Mittelabschnitt 6 weist im Verhältnis zur Querschnittsfläche des Oberabschnittes 5 und des Endabschnitts 7 eine deutlich verringerte Querschnittsfläche auf, um zwischen dem Oberabschnitt 5 und dem Endabschnitt 7 einen Hohlraum zur Einbringung eines Klebemittels innerhalb der Bohrung zu bilden. Mit der Auflagefläche 8 liegt der Halter 1 auf der Sandwichplatte auf, während der Oberabschnitt 5 im Wesentlichen bündig mit einer Oberseite einer Sandwichplatte abschließt.

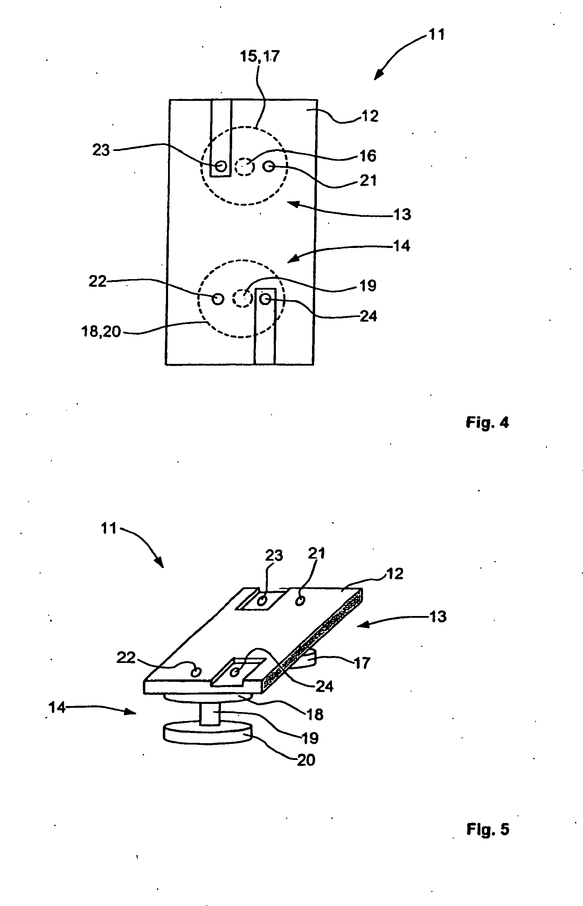

Die Fig. 4 zeigt eine Draufsicht auf eine zweite Ausführungsvariante eines Halters.

Im Unterschied zur ersten Ausführungsvariante des Halters 1 weist der Halter 11 nach Maßgabe der zweiten Ausführungsvariante eine Grundplatte 12 mit zwei Haltezapfen 13,14 auf, wodurch eine Verdrehung des Halters 11 durch Torsionskräfte vermieden wird.

Der Halter 11 umfasst unter anderem eine Grundplatte 12. Unterhalb der Grundplatte 12 sind die beiden, von der Grundplatte 12 verdeckten Haltezapfen 13,14 angeordnet. Der Haltezapfen 13 umfasst einen Befestigungsabschnitt mit einem Oberabschnitt 15, einem Mittelabschnitt 16 sowie einem Endabschnitt 17. Entsprechend hierzu weist ein Befestigungsabschnitt des Haltezapfens 14 einen Oberabschnitt 18, einen Mittelabschnitt 19 sowie einen Endabschnitt 20 auf. Die Haltezapfen 13,14 und die Grundplatte 12 sind einstückig ausgebildet und können beispielsweise mit einem Kunststoffmaterial im Spritzgussverfahren hergestellt werden. Das Kunststoffmaterial kann alternativ eine Faserverstärkung aufweisen.

In Entsprechung zur ersten Ausführungsvariante des erfindungsgemäßen Halters 1 kann auf der Grundplatte 12 ein nicht dargestellter Adapter befestigt sein, der eine leichte und schnelle Verbindung mit entsprechend ausgestalteten Gegenstücken erlaubt, die wiederum an einer mittels des Halters 11 zu befestigenden Leitung angeordnet sind.

Bevorzugt wird eine zu befestigende Leitung mittels des erfindungsgemäßen Halters 11 ohne einen Adapter bzw. ohne entsprechende Gegenstücke unmittelbar im Bereich der Grundplatte 12 mittels geeigneter Verbindungselemente, beispielsweise mit Kabeibindern, Schellen, Klemmen oder dergleichen fixiert. Zu diesem Zweck weist die Grundplatte 12 mindestens eine, in den Fig. 4,5 nicht dargestellte, Durchführung zur Aufnahme bzw. Befestigung der Verbindungselemente auf. Die Durchführung kann beispielsweise entsprechend zur Durchführung 4a des Adapters 4 gestaltet sein (vgl. Fig. 1).

Der Aufbau der Haltezapfen 13,14 des Halters 11 entspricht im Wesentlichen dem Aufbau des Haltezapfens 2 der ersten Ausführungsvariante des Halters 1, sodass im Wesentlichen auf die Ausführungen im Rahmen der Fig. 1 bis 3 verwiesen werden kann. In die Grundplatte 12 und in die Haltezapfen 13,14 sind zwei Einfüllkanäle 21,22 sowie zwei Austrittskanäle 23,24 zum Einbringen eines Klebemittels zur Befestigung der Haltezapfen 13,14 in entsprechend ausgebildete Bohrungen innerhalb einer Sandwichplatte vorgesehen. Die Anordnung, die geometrische Gestaltung sowie Funktion der Einfüllkanäle 21,22 und der Austrittskanäle 23,24 entspricht im Wesentlichen der Ausgestaltung des Einfüllkanals 9 bzw. des Austrittskanals 10 nach Maßgabe der ersten Ausführungsvariante des Halters 1 (vgl. Fig. 1 bis 3). Durch das Vorhandensein von zwei Haltezapfen 13,14 ist eine Verdrehung des Halters 11 durch Torsionskräfte weitgehend ausgeschlossen.

Die Fig. 5 zeigt eine perspektivische Ansicht der zweiten Ausführungsvariante des Halters 11.
Die beiden Haltezapfen 13,14 sind unterhalb der Grundplatte 12 angeordnet und bilden mit dieser eine Einheit. Der Haltezapfen 14 weist den Befestigungsabschnitt mit dem Oberabschnitt 18, dem Mittelabschnitt 19 und dem Endabschnitt 20 auf.

Entsprechend ist der Befestigungsbereich des Haltezapfens 13 mit einem Oberabschnitt 15, einem Mittelabschnitt 16 und mit einem Endabschnitt 17 ausgebildet, wobei in der Darstellung der Fig. 5 der Oberabschnitt 15 sowie der Mittelabschnitt 16 von der Grundplatte 12 verdeckt und daher nicht darstellbar sind. Die Oberabschnitte 15,18 sowie die Endabschnitte 17,20 weisen in Entsprechung zur ersten Ausführungsvariante ebenfalls eine im Wesentlichen scheibenförmige geometrische Gestaltung auf. Die Durchmesser der Oberabschnitte 15,18 sowie der Endabschnitte 17,20 entsprechen hierbei im Wesentlichen den Durchmessern der nicht dargestellten Bohrungen, in die die Haltezapfen 13,14 zum Zweck der Befestigung des Halters 11 eingebracht werden. Die Mittelabschnitte 16,19 weisen im Vergleich hierzu eine verringerte Querschnittsfläche auf, um einen Hohlraum zur Einbringung eines Klebemittels zu schaffen. Weisen die Ober- sowie die Endabschnitte 15,18 und 17,18 beispielsweise eine von der Kreisform abweichende geometrische Gestaltung auf, so müssen in das Leichtbauelement Ausnehmungen mit einer entsprechenden Querschnittsgestaltung eingebracht werden, um eine ausreichende Abdichtung des Hohlraums zu gewährleisten.

Die Grundplatte 12 bzw. die Haltezapfen 13,14 weisen zwei Einfüllkanäle 21,22 zur Einbringung eines Klebemittels auf. Weiterhin sind zwei Austrittskanäle 23,24 vorgesehen, um zum einen den Abschluss des Befestigungsvorganges durch das Austreten von Klebemittel aus den Austrittskanälen 23,24 anzuzeigen und zum anderen für eine Entlüftung beim Einfüllen des Klebemittels durch die Einfüllkanäle 21,22 Sorge zu tragen.

Durch das Vorhandensein von zwei Haltezapfen 13,14 bei der zweiten Ausführungsvariante des erfindungsgemäßen Halters 11 ist eine Verdrehung des Halters 12 durch Torsionskräfte weitgehend ausgeschlossen. Darüber hinaus lassen sich auch Leitungen mit einem höheren Gewicht und/oder größeren Querschnittsabmessungen, beispielsweise Hydraulikleitungen, Stromleitungen oder dergleichen, mittels des erfindungsgemäßen Halters 11 sicher und fest an Sandwichplatten befestigen.

Der erfindungsgemäße Halter 11 kann abweichend vom gezeigten Ausführungsbeispiel nach Maßgabe der Fig. 4,5 auch drei, vier oder eine größere Anzahl von Haltezapfen aufweisen. Der Einsatz von Haltern mit einer größeren Anzahl von Haltezapfen ist insbesondere bei der Befestigung von Leitungen mit höherem Gewicht von Vorteil.

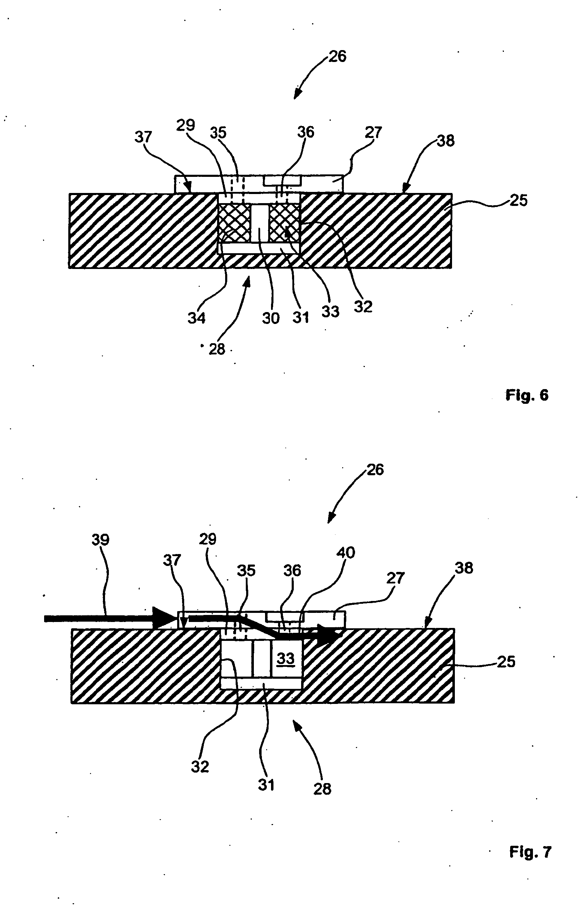

Die Fig. 6 zeigt eine Schnittdarstellung durch eine Sandwichplatte 25 mit einem darin eingeklebten Halter 26 nach Maßgabe der ersten Ausführungsvariante des Halters.

Der Halter 26 umfasst unter anderem eine Grundplatte 27, an der ein Haltezapfen 28 angeordnet ist. Der Haltezapfen 28 bildet zusammen mit der Grundplatte 27 eine einstückige Einheit. Eine mit dem Halter 26 nach Maßgabe der Darstellung der Fig. 6 zu befestigende, nicht näher dargestellte Leitung wird ohne einen Adapter bzw. ohne Gegenstücke unmittelbar im Bereich der Grundplatte 27 mittels geeigneter Verbindungselemente, beispielsweise mit Kabelbindern, Schellen, Klemmen oder dergleichen fixiert. Zu diesem Zweck weist die Grundplatte 12 des Halters 26 mindestens eine, in der Fig. 6 nicht dargestellte Durchführung zur Aufnahme bzw. Befestigung der Verbindungsmittel auf.

Ein Befestigungsabschnitt des Haltezapfens 28 weist einen Oberabschnitt 29, einen Mittelabschnitt 30 sowie einen Endabschnitt 31 auf. Die Durchmesser des Oberabschnittes 29 sowie des Endabschnittes 31 entsprechen in etwa einem Bohrungsdurchmesser einer Bohrung 32, die zur Befestigung des Halters 26 in der Sandwichplatte 25 dient. Die Bohrung 32 kann hierbei die Sandwichplatte 25 vollständig durchdringen oder als Sackbohrung ausgebildet sein. Die Summe aus der Höhe des Oberabschnittes 29, der Höhe des Mittelabschnittes 30 und der Höhe des Endabschnittes 31 bzw. die Gesamthöhe des Haltezapfens 28 ist vorzugsweise etwas kleiner als eine Tiefe der Bohrung 32.

Der Mittelabschnitt 30 weist im Vergleich zu den Querschnittsflächen des Oberabschnittes 29 und des Endabschnittes 31 wiederum eine kleinere Querschnittsfläche auf, sodass sich zwischen dem Mittelabschnitt 30 und der Bohrung 32 ein Hohlraum 33 bildet. Zumindest eine den Oberabschnitt 29 sowie den Endabschnitt 31 umgebende, gedachte Hüllfläche ist damit in Bezug auf eine Innenfläche der Bohrung 32 im Wesentlichen hinterschneidungsfrei ausgebildet. Der Hohlraum 33 ermöglicht nach der vollständigen Einbringung des Haltezapfens 28 in die Bohrung 32 das Einfüllen eines Klebemittels 34 über den Einfüllkanal 35 zur Befestigung des Halters 26 in der Sandwichplatte 25. Der Austrittskanal 36 dient hierbei zum einen zur Anzeige des Abschlusses des Füllvorganges und zum anderen der Entlüftung des Hohlraums 33. Als Klebemittel 34 findet, in Abhängigkeit des Halterwerkstoffes, vorzugsweise ein niedrigviskoser, schnell aushärtender Klebstoff Verwendung.

Mit einer Auflagefläche 37 liegt der Halter 26 auf einer Oberseite 38 der Sandwichplatte 25 auf.

Zur Fixierung während der Montage des Halters 26 kann die Grundplatte 27 vorzugsweise mit einem Klebemittel, beispielsweise mit einem doppelseitigen Klebeband oder dergleichen, versehen sein. Hierdurch ergibt sich eine weitere Vereinfachung bei der Montage des erfindungsgemäßen Halters 26.

Die Kernstruktur der Sandwichplatte 25 ist in sich geschlossen und beispielsweise durch so genannte Honigwaben gebildet. Hierdurch wird ein undefinierter Austritt des Klebemittels 34 aus dem Hohlraum 33 in die Kernstruktur vermieden. Soll der erfindungsgemäße Halter 26 beispielsweise in einer Sandwichplatte 25 mit einer offenen, drainagefähigen Kernstruktur eingesetzt werden, so müssen zusätzliche Vorkehrungen getroffen werden, um einen undefinierten Austritt des Klebemittels 34 aus dem Hohlraum 33 in die offene Kernstruktur der Sandwichplatte 25 zu verhindem. Dies kann beispielsweise dadurch erfolgen, dass der Oberabschnitt 29 sowie der Endabschnitt 31 von einer zumindest bereichsweise Durchbrechungen aufweisenden Hüllfolie umgeben werden, die einen undefinierten Austritt des Klebemittels 34 in die Kernstruktur der Sandwichplatte 25 verhindert oder zumindest bis zum Eintritt der vollständigen Aushärtung des Klebemittels 34 begrenzt. Die Hüllfläche nimmt hierbei die Gestalt eines Zylindermantels an, dessen Höhe in etwa der Höhe des Haltezapfens 28 entspricht.

Die Fig. 7 zeigt eine schematische Darstellung des Kräfteverlaufs bei der Überleitung von Scherkräften vom Halter 26 in die Sandwichplatte 25.

Der Haltezapfen 28 des Halters 26 befindet sich innerhalb der Bohrung 32 in der Sandwichplatte 25. Die Auflagefläche 37 der Grundplatte 27 liegt in etwa vollflächig auf der Oberseite der Sandwichplatte 25 auf. Der Oberabschnitt 29 sowie der Endabschnitt 31, die jeweils scheibenförmig ausgebildet sind, liegen mit ihren Außenflächen jeweils nahezu vollflächig an der Innenfläche der Bohrung 32 an. Der Hohlraum 33 ist zur besseren Verdeutlichung nicht mit dem Klebemittel 34 ausgefüllt.

Greift eine Scherkraft 39 beispielsweise in etwa parallel zu Oberseite 38 der Sandwichplatte 25 an der Grundplatte 27 an, so wird diese in Richtung des Pfeils 40 von der Grundplatte 27 durch den Oberabschnitt 29 in die Sandwichplatte 25 abgeleitet. Aus der Darstellung der Fig. 7 ist ersichtlich, dass der Halter 26 auch ohne das Vorhandensein eines Klebemittels schon geringe Scherkräfte 39 aufnehmen kann. Um höhere Scherkräfte 39 aufnehmen zu können ist es vorteilhaft, die Passungen zwischen dem Oberabschnitt 29 sowie dem Endabschnitt 31 und der Bohrung 32 als Presspassungen auszubilden, sodass der Haltezapfen 28 zur Befestigung des Halters 26 unter leichtem Druck in die Bohrung gedrückt werden muss. Der Einfüllkanal 35 sowie der Austrittskanal 36 sind der Vollständigkeit halber in der Darstellung der Fig. 7 dargestellt.

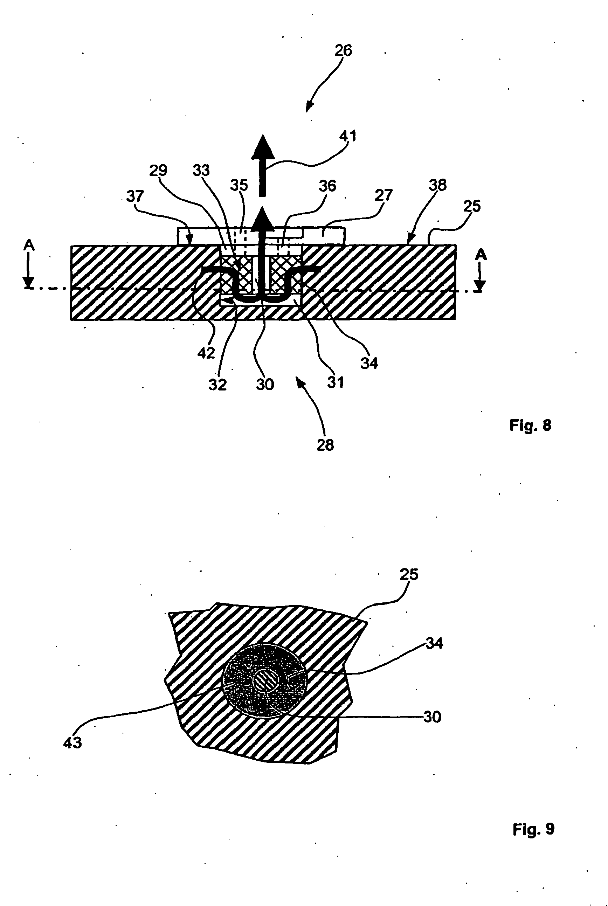

Die Fig. 8 zeigt eine schematische Darstellung des Kräfteverlaufs bei der Überleitung von Zugkräften vom Halter 26 in die Sandwichplatte 25.

Der Haltezapfen 28 des Halters 26 ist innerhalb der Bohrung 32 in der Sandwichplatte 25 aufgenommen. Die Auflagefläche 37 der Grundplatte 27 liegt in etwa vollflächig auf einer Oberseite 38 der Sandwichplatte 25 an. Der Oberabschnitt 29 sowie der Endabschnitt 31 schließen mit ihren Außenflächen nahezu vollflächig an der Innenseite der Bohrung 32 an.

Im Unterschied zu der Darstellung der Fig. 7 ist der Hohlraum 33 vollständig mit dem Klebemittel 34 ausgefüllt. Das Einfüllen des Klebemittels 34 in den Hohlraum 33 erfolgt über den Einfüllkanal 35. Der Abschluss des Füllvorganges lässt sich durch Austritt des Klebemittels 34 aus dem Austrittskanal 36 erkennen. Der Austrittskanal 36 erfüllt daneben die Funktion einer Entlüftung, um eine schnelle und zugleich blasenfreie Befüllung des Hohlraums 33 mit dem Klebemittel 34 zu gewährleisten.

Greift eine Zugkraft 41 an dem Halter 26 bzw. der Grundplatte 27 an, so wird diese entlang des Pfeils 42 über den Haltezapfen 28 und das Klebemittel 34 in die Sandwichplatte 25 eingeleitet. Hierdurch ergibt sich eine gute und gleichmäßige Verteilung der Wirkung der Zugkraft 41 auf die Sandwichplatte 25. Durch die Anordnung von Widerstandselementen im Bereich des Mittelabschnittes 30 lässt sich die Größe der vom Halter 26 übertragbaren Zug- und Torsionskräfte steigern.

Die Fig. 9 illustriert einen Schnitt durch die Sandwichplatte entlang der Schnittlinie A-A bei der Einleitung von Zugkräften (vgl. Fig. 8).
Die Zugkräfte werden vom Mittelabschnitt 30 des Halters über das Klebemittel 34 in die Sandwichplatte 25 übergeleitet. Aus der Darstellung der Fig. 9 ist ersichtlich, dass die zur Überleitung der Zugkräfte in die Sandwichplatte 25 zur Verfügung stehende Fläche 43 relativ groß ist, sodass sich eine im Wesentlichen gleichmäßig verteilte Überleitung von Zugkräften ausgehend vom Mittelabschnitt 30, über das Klebemittel 34 in die Sandwichplatte 25 ergibt.

Nach Maßgabe des erfindungsgemäßen Verfahrens zur Befestigung von Leitungen an Leichtbauelementen von Verkehrsmitteln, insbesondere von Sandwichplatten in Luftfahrzeugen, wird zunächst mindestens eine Bohrung in die Sandwichplatte eingebracht. Anschließend wird der erfindungsgemäße Halter, der beispielsweise nur einen Haltezapfen aufweist, in die Bohrung eingesetzt bzw. leicht in diese eingedrückt. Zum Fixieren des Halters in der Bohrung kann die Auflagefläche gegebenenfalls ein Klebemittel, beispielsweise ein Doppelklebeband, aufweisen. Im Anschluss daran wird die Bohrung bzw. der Hohlraum solange über den Einfüllkanal des Halters mit einem Klebemittel befüllt, bis dieses durch das Austreten aus dem Austrittskanal das Ende des Einklebe- bzw. Befestigungsvorganges anzeigt. Abschließend wird die zu befestigende Leitung entweder direkt an dem Halter mittels einer entsprechenden Aufnahme befestigt oder aber es wird ein Adapter auf den Halter aufgesteckt oder auf andere Art und Weise befestigt, in den dann wiederum ein an der Leitung befindliches Gegenstück einbringbar ist.

Soll mittels des erfindungsgemäßen Verfahrens ein Halter befestigt werden, der mehrere Haltezapfen aufweist, so muss eine entsprechende Anzahl von Bohrungen in die Sandwichplatte eingebracht werden, in die dann die Haltezapfen des Halters eingesetzt bzw. eingedrückt werden. Die Befestigung des Halters selbst erfolgt in der gleichen Weise wie die Befestigung eines Halters mit nur einem Haltezapfen.

### Bezugszeichenliste

- 1: Halter
- 2: Haltezapfen
- 3: Grundplatte
- 4: Adapter
- 4a: Durchführung
- 5: Oberabschnitt
- 6: Mittelabschnitt
- 7: Endabschnitt
- 8: Auflagefläche
- 9: Einfüllkanal
- 10: Austrittskanal
- 11: Halter
- 12: Grundplatte
- 13: Haltezapfen
- 14: Haltezapfen
- 15: Oberabschnitt
- 16: Mittelabschnitt
- 17: Endabschnitt
- 18: Oberabschnitt
- 19: Mittelabschnitt
- 20: Endabschnitt
- 21: Einfüllkanal
- 22: Einfüllkanal
- 23: Austrittskanal
- 24: Austrittskanal
- 25: Sandwichplatte
- 26: Halter
- 27: Grundplatte
- 28: Haltezapfen
- 29: Oberabschnitt
- 30: Mittelabschnitt
- 31: Endabschnitt

- 32: Bohrung
- 33: Hohlraum
- 34: Klebemittel
- 35: Einfüllkanal
- 36: Austrittskanal
- 37: Auflagefläche
- 38: Oberseite
- 39: Scherkraft
- 40: Pfeil
- 41: Zugkraft
- 42: Pfeil
- 43: Fläche

## Patentansprüche

1. Halter (1,11,26) zur Befestigung von Leitungen an Leichtbauelementen von Verkehrsmitteln, insbesondere an Sandwichplatten (25) von Luftfahrzeugen, mit einer mindestens einen Haltezapfen (2,13,14,28) aufweisenden Grundplatte (3,12,27), wobei der zumindest eine Haltezapfen (2,13,14,28) in jeweils eine Bohrung (32) innerhalb eines Leichtbauelementes einklebbar ist, wobei der zumindest eine Haltezapfen (2,13,14,28) einstückig mit der Grundplatte (3,12,27) verbunden ist, wobei der zumindest eine Haltezapfen (2,13,14,28) einen Befestigungsabschnitt mit einem Oberabschnitt (5,15,18,29), einem Endabschnitt (7,17,20,31) sowie einen den Oberabschnitt (5,15,18,29) und den Endabschnitt (7,17,20,31) verbindenden Mittelabschnitt (6,16,19,30) aufweist, wobei der Mittelabschnitt (6,16,19,30) zumindest abschnittsweise eine von der Kreisform abweichende Querschnittsgeometrie aufweist.

2. Halter (1,11,26) nach Anspruch 1, **dadurch gekennzeichnet, dass** der Befestigungsabschnitt jeweils in eine Bohrung (32) innerhalb des Leichtbauelementes einbringbar ist.

3. Halter (1,11,26) nach einem der Ansprüche 1 oder 2, **dadurch gekennzeichnet, dass** der Oberabschnitt (5,15,18,29) und der Endabschnitt (7,17,20,31) im Wesentlichen scheibenförmig ausgebildet sind, wobei ein Durchmesser des Oberabschnittes (5,15,18,29) sowie ein Durchmesser des Endabschnittes (7,17,20,31) im Wesentlichen, einem Bohrungsdurchmesser der jeweiligen Bohrung (32) entsprechen.

4. Halter (1,11,26) nach einem der Ansprüche 1 bis 3, **dadurch gekennzeichnet, dass** der Mittelabschnitt (6,16,19,30) zumindest abschnittsweise eine kleinere Querschnittsfläche als eine Querschnittsfläche der jeweiligen Bohrung (32) aufweist, um einen Hohlraum (33) zur Aufnahme eines Klebemittels (34) zu bilden.

5. Halter (1,11,26) nach einem der Ansprüche 1 bis 4, **dadurch gekennzeichnet, dass** in den Hohlraum (33) das Klebemittel (34) zur Befestigung des oder Haltezapfen (2,13,14,28) in der Bohrung (32) innerhalb des Leichtbauelementes einbringbar ist.

6. Halter (1,11,26) nach einem der Ansprüche 1 bis 5, **dadurch gekennzeichnet, dass** der Mittelabschnitt (6,16,19,30) mindestens ein Widerstandselement, insbesondere mindestens einen Vorsprung, mindestens eine Vertiefung oder dergleichen aufweist.

7. Halter (1,11,26) nach einem der Ansprüche 1 bis 6, **dadurch** gekenntzeichnet, dass der wenigstens eine Haltezapfen (2,13,14,28) mindestens einen Einfüllkanal (9,21,22,35) zum Einbringen des Klebemittels (34) und mindestens einen Austrittskanal (10,23,24,36) zur Entlüftung und/oder zur Füllstandsanzeige aufweist.

8. Halter (1,11,26) nach einem der Ansprüche bis 7, **dadurch gekennzeichnet, dass** mindestens eine Leitung unmittelbar im Bereich der Grundplatte (3) befestigbar ist.

9. Halter (1,11,26) nach einem der Ansprüche 1 bis 8, **dadurch gekennzeichnet, dass** die Grundplatte (3) mindestens eine Durchführung zur Anbindung mindestens eines Befestigungsmittels, insbesondere mindestens eines Kabelbinders, aufweist.

10. Halter (1,11,26) nach einem der Ansprüche 1 bis 9, **dadurch gekennzeichnet, dass** auf der Grundplatte (3) ein Adapter (4) zur Befestigung der Leitung oder der Leitungen befestigbar ist.

11. Halter (1,11,26) nach Anspruch 10, **dadurch gekennzeichnet, dass** der Adapter (4) mindestens eine Durchführung (4a) zur Anbindung mindestens eines Befestigungsmittels, insbesondere mindestens eines Kabelbinders, aufweist.

12. Halter (1,11,26) nach einem der Ansprüche 1 bis 11, **dadurch gekennzeichnet, dass** das Klebemittel (34) mit einem Kunststoffmaterial, insbesondere mit einem niedrigviskosen, aushärtbaren Kunststoffmaterial, gebildet ist.

13. Verfahren zur Befestigung von Leitungen an Leichtbauelementen von Verkehrsmitteln, insbesondere an Sandwichplatten (25) von Luftfahrzeugen, mittels eines mindestens einen Haltezapfen (2,13,14,28) und eine Grundplatte (3,12,27) aufweisenden Halters (1,11,26) nach einem der Ansprüche 1 bis 12, **dadurch gekennzeichnet, dass** mindestens eine Bohrung (32) in das Leichtbauelement eingebracht wird, der wenigstens eine Haltezapfen (2,13,14,28) in die jeweilige Bohrung (32) eingebracht wird, ein Klebemittel (34) durch mindestens einen Einfüllkanal (9,21,22,35) im jeweiligen Haltezapfen (2,13,14,28) in die jeweilige Bohrung (32) eingebracht wird, um den Halter (1,11,26) in dem Leichtbauelement zu befestigen, und mindestens eine Leitung im Bereich der Grundplatte (3,12,27) befestigt wird.

14. Verfahren nach Anspruch 13, **dadurch gekennzeichnet, dass** ein Adapter (4) im Bereich der Grundplatte (3,12,27) befestigt wird, wobei die Leitung oder die Leitungen an dem Adapter (4) befestigt werden.

15. Verfahren nach Anspruch 13 oder 14, **dadurch gekennzeichnet, dass** das Klebemittel (34) solange in den Einfüllkanal oder die Einfüllkanäle (9,21,22,35) eingebracht wird, bis das Klebemittel (34) aus dem wenigsten einen Austrittskanal (10,23,24,3.6) austritt.

## Claims

1. A retainer (1, 11, 26) for attaching lines to lightweight elements of transport vehicles, in particular to sandwich panels (25) of aircraft, with a base plate (3, 12, 27) comprising at least one retaining stud (2, 13, 14, 28),
wherein the at least one retaining stud (2, 13, 14, 28) is adapted to be cemented into a borehole (32) within a lightweight element,
wherein the at least one retaining stud (2, 13, 14, 28) is connected in one piece to the base plate (3, 12, 27),
wherein the at least one retaining stud (2, 13, 14, 28) comprises an attachment section with a top section (5, 15, 18, 29), an end section (7, 17, 20, 31) and a middle section (6, 16, 19, 30) connecting the top section (5, 15, 18, 29) and the end section (7, 17, 20, 31),
wherein the middle section (6, 16, 19, 30) comprises a cross-sectional geometry deviating from the circularity at least in some sections.

2. The retainer (1, 11, 26) of claim 1, **characterized in, that** the attachment section can be inserted into a borehole (32) within the lightweight element.

3. The retainer (1, 11, 26) of claim 1 or 2, **characterized in, that** the top section (5, 15, 18, 29) and end section (7, 17, 20, 31) are formed essentially disc-shaped,
wherein a diameter of the top section (5, 15, 18, 29) and a diameter of the end section (7, 17, 20, 31) correspond to a borehole diameter of the respective borehole (32).

4. The retainer (1,11,26) of any of claims 1 to 3, **characterized in, that** at least in some sections the cross-sectional area of the middle section (6, 16, 19, 30) is smaller than the cross-sectional area of the respective borehole (32) so as to form a hollow space (33) for accommodating adhesive (34).

5. The retainer (1,11,26) of any of claims 1 to 4, **characterized in, that** the adhesive (34) for attaching the retaining stud (2, 13, 14, 28) or retaining studs (2, 13, 14, 28) in the borehole (32) can be placed into the hollow space within the lightweight element.

6. The retainer (1,11,26) of any of claims 1 to 5, **characterized in, that** the middle section (6, 16, 19, 30) comprises at least one resistance element, in particular at least one projection, at least one indentation or the like.

7. The retainer (1,11,26) of any of claims 1 to 6, **characterized in, that** the at least one retaining stud (2, 13, 14, 28) comprises at least one filling channel (9, 21, 22, 35), into which adhesive can be placed, and at least one outlet channel for venting and/or indicating a fill level.

8. The retainer (1,11,26) of any of claims 1 to 7, **characterized in, that** at least one line can be attached directly in the region of the base plate (3).

9. The retainer (1,11,26) of any of claims 1 to 8, **characterized in, that** the base plate (3) comprises at least one lead-through for attaching at least one attachment means, in particular for at least one cable tie.

10. The retainer (1,11,26) of any of claims 1 to 9, **characterized in, that** an adapter (4) for attaching the line or the lines can be attached to the base plate.

11. The retainer (1,11,26) of claim 10, **characterized in, that** the adapter (4) comprises at least one lead-through (4a) for attaching at least one attachment means, in particular for at least one cable tie.

12. The retainer (1,11,26) of one of claims 1 to 11, **characterized in, that** the adhesive (34) is composed of a plastic material, in particular of a low-viscosity rapid-hardening plastic material.

13. A method for attaching lines to lightweight elements of transport vehicles, in particular to sandwich panels (25) of aircraft, by means of a retainer (1, 11, 26) comprising at least one retaining stud (2, 13, 14, 28) and a base plate (3, 12, 27), of any of claims 1 to 12, **characterized in, that** at least one borehole (32) will be placed into the lightweight element, that the at least one retaining stud (2, 13, 14, 28) will be inserted into the respective borehole (32), that adhesive (34) will be placed into the respective borehole (32) through at least one filling channel (9, 21, 22, 35) in the at least one retaining stud (2, 13, 14, 28) so as to attach the retainer (1, 11, 26) in the lightweight element, and that at least one line will be attached in the region of the base plate (3, 12, 27).

14. The method of claim 13, **characterized in, that** an adapter (4) will be attached in the region of the base plate (3, 12, 27), wherein the line or the lines will be attached to the adapter (4).

15. The method of claim 13 or 14, **characterized in, that** the adhesive (34) will be placed into the at least one filling channel (9, 21, 22, 35) until the adhesive (34) issues from the at least one outlet channel (10, 23, 24, 36).

## Revendications

1. Dispositif de fixation (1, 11, 26) pour la fixation de conduits sur des éléments légers de moyens de transport, en particulier sur des panneaux sandwichs (25) d'aéronefs, comprenant une plaque de base (3, 12, 27) qui présente au moins un tourillon de retenue (2, 13, 14, 28), dispositif de fixation dans lequel le au moins un tourillon de retenue (2, 13, 14, 28) peut être collé dans respectivement un alésage (32) à l'intérieur d'un élément léger, le au moins un tourillon de retenue (2, 13, 14, 28) est assemblé d'une seule pièce avec la plaque de base (3, 12, 27), le au moins un tourillon de retenue (2, 13, 14, 28) présente une section de fixation avec une section supérieure (5, 15, 18, 29), une section extrême (7, 17, 20, 31), ainsi qu'une section centrale (6, 16, 19, 30) qui assemble la section supérieure (5, 15, 18, 29) et la section extrême (7, 17, 20, 31), la section centrale (6, 16, 19, 30) présentant au moins par sections une géométrie en coupe transversale différente de la forme circulaire.

2. Dispositif de fixation (1, 11, 26) suivant la revendication 1, **caractérisé en ce que** la section de fixation peut être respectivement introduite dans un alésage (32) à l'intérieur de l'élément léger.

3. Dispositif de fixation (1, 11, 26) suivant l'une des revendications 1 et 2, **caractérisé en ce que** la section supérieure (5, 15, 18, 29) et la section extrême (7, 17, 20, 31) sont réalisées essentiellement en forme de disque, un diamètre de la section supérieure (5, 15, 18, 29), ainsi qu'un diamètre de la section extrême (7, 17, 20, 31), correspondant essentiellement à un diamètre de l'alésage respectif (32).

4. Dispositif de fixation (1, 11, 26) suivant l'une des revendications 1 à 3, **caractérisé en ce que** la section centrale (6, 16, 19, 30) présente au moins par sections une aire de section plus petite qu'une aire de section de l'alésage respectif (32), pour former un espace creux (33) destiné à recevoir un adhésif (34).

5. Dispositif de fixation (1, 11, 26) suivant l'une des revendications 1 à 4, **caractérisé en ce que** l'adhésif (34), destiné à la fixation du ou des tourillons de retenue (2, 13, 14, 28) dans l'alésage (32) à l'intérieur de l'élément léger, peut être introduit dans l'espace creux (33).

6. Dispositif de fixation (1, 11, 26) suivant l'une des revendications 1 à 5, **caractérisé en ce que** la section centrale (6, 16, 19, 30) présente au moins un élément de résistance, en particulier au moins une saillie, au moins un creux ou autres.

7. Dispositif de fixation (1, 11, 26) suivant l'une des revendications 1 à 6, **caractérisé en ce que** le au moins un tourillon de retenue (2, 13, 14, 28) présente au moins un canal de remplissage (9, 21, 22, 35) pour l'introduction de l'adhésif (34) et au moins un canal de sortie (10, 23, 24, 36) pour la désaération et/ou l'indication du niveau de remplissage.

8. Dispositif de fixation (1, 11, 26) suivant l'une des revendications 1 à 7, **caractérisé en ce qu'**au moins un conduit peut être fixé directement dans la zone de la plaque de base (3).

9. Dispositif de fixation (1, 11, 26) suivant l'une des revendications 1 à 8, **caractérisé en ce que** la plaque de base (3) présente au moins une traversée pour l'attache d'au moins un moyen de fixation, en particulier d'au moins une attache de câbles.

10. Dispositif de fixation (1, 11, 26) suivant l'une des revendications 1 à 9, **caractérisé en ce qu'**un adaptateur (4) peut être fixé sur la plaque de base (3) pour la fixation du ou des conduits.

11. Dispositif de fixation (1, 11, 26) suivant la revendication 10, **caractérisé en ce que** l'adaptateur (4) présente au moins une traversée (4a) pour l'attache d'au moins un moyen de fixation, en particulier d'au moins une attache de câbles.

12. Dispositif de fixation (1, 11, 26) suivant l'une des revendications 1 à 11, **caractérisé en ce que** l'adhésif (34) est formé d'une matière plastique, en particulier d'une matière plastique durcissable de basse viscosité.

13. Procédé de fixation de conduits sur des éléments légers de moyens de transport, en particulier sur des panneaux sandwichs (25) d'aéronefs, au moyen d'un dispositif de fixation (1, 11, 26) suivant l'une des revendications 1 à 12, présentant au moins un tourillon de retenue (2, 13, 14, 28) et une plaque de base (3, 12, 27), **caractérisé en ce qu'**au moins un alésage (32) est pratiqué dans l'élément léger, le au moins un tourillon de retenue (2, 13, 14, 28) est introduit dans l'alésage respectif (32), un adhésif (34) est introduit au travers d'au moins un canal de remplissage (9, 21, 22, 35) dans le tourillon de retenue respectif (2, 13, 14, 28) dans l'alésage respectif (32), pour fixer le dispositif de fixation (1, 11, 26) dans l'élément léger, et au moins un conduit est fixé dans la zone de la plaque de base (3, 12, 27).

14. Procédé suivant la revendication 13, **caractérisé en ce qu'**un adaptateur (4) est fixé dans la zone de la plaque de base (3, 12, 27), le ou les conduits étant alors fixés sur l'adaptateur (4).

15. Procédé suivant l'une des revendications 13 et 14, **caractérisé en ce que** l'adhésif (34) est introduit dans le canal de remplissage ou les canaux de remplissage (9, 21, 22, 35) jusqu'à ce que l'adhésif (34) s'échappe du au moins un canal de sortie (10, 23, 24, 36).
